# EUROPEAN PATENT APPLICATION

(11) **EP 2 905 104 A2**
(43) Date of publication of application: **12.08.2015**
(21) Application number: 12831885.4
(22) Date of filing: 13.09.2012
(51) Int. Cl.: B23K 26/02, G01N 21/63, G01J 5/00

(54) **METHOD AND DEVICE FOR OPTICALLY MONITORING A SURFACE IN AN AREA THEREOF SUBJECT TO LASER RADIATION**

(30) Priority: 13.09.2011 RU 2011137685
(71) Applicant: Chivel, Yuri Aleksandrovich, 42100 Saint Etienne (FR)
(72) Inventor: Chivel, Yuri Aleksandrovich, 42100 Saint Etienne (FR)
(86) International application number: PCT/IB2012/001793
(87) International publication number: WO 2013/038263

(57) **Abstract**

The invention relates to the field of measuring technology and can be used in measuring the temperature of a surface in an area thereof subject to laser radiation. The aim of the claimed invention is to develop a method for optically monitoring a surface in an area thereof subject to laser radiation by scanning the surface using a galvanometer scanner with an F-theta lens, and a device for implementing said method, thereby making it possible to obtain full information about the condition of the surface under the effect of laser radiation. The spectral lines of the thermal radiation of the surface recorded with a pyrometer, the spectral bands of the thermal radiation of the surface recorded with a video camera and the spectral lines of the radiation of sources of illumination are situated in the spectral passband of a galvanometer scanner on either side and in the immediate vicinity of the spectral line of the laser radiation. The device additionally comprises a rotating gradient mirror with an elliptical region in the centre having a coating with 100% reflection on the wavelength of the laser, while the peripheral region of the mirror has high transmission in the region of the spectrum outside the emission band of the laser. The device additionally comprises a rotating gradient mirror having a central elliptical aperture with 100% transmission of laser radiation and a broadband reflective coating on the periphery of the mirror. The device additionally comprises a source of illumination of the surface in the area subject to laser treatment, which source is optically connected to the galvanometer scanner and the video camera, wherein the wavelength of the radiation of said source is situated close to the line of radiation of the laser and in the spectral band of reflection of the mirrors of the galvanometer scanner.

## Description

### FIELD OF THE INVENTION

The invention relates to the field of measuring technology and can be used in measuring the temperature of a surface in an area thereof subject to laser radiation.

### BACKGROUND OF INVENTION

A method is known for optical monitoring the surfaces in the laser processing by measuring the temperature [1], consisting in the reception of the thermal radiation from the surface in the two spectral ranges.

The disadvantage of this method is that it can not be applied to the system with the galvanometer scanner with F-teta lens and a limited level of information.

Method is known for temperature control of selective laser sintering process [2], consisting in the measurement of the temperature in laser spot by pyrometer when scanning surface of powder bed.

The disadvantage of this method is that it can not be applied to the system with the galvanometer scanner with F-teta lens and a limited level of information about sintering process.

Method consisting of registration of thermal radiation from the surface in two spectral intervals presented in [3,4] is the one closest to the claimed method.

The disadvantage of this method is that registration is performed in the spectral intervals significantly distant from the laser wavelength , which results, when scanning the surface, in a significant shift between the surface image at these wavelengths and image at the laser wavelength due to aberrations of industrial F-teta lens. This results to considerable error in the result of measurement of temperature. F-teta lens can be corrected for only one wavelength and multichannel pyrometer measurement can not be performed correctly. Also corrected F-teta lens is very expensive.

Device for optical monitoring is known [1], comprising a scanner and a 2- channel optical pyrometer with lens.

This device does not provide the precision in measuring the temperature of small spots of laser irradiation using a scanner with a F-teta lens due strong chromatic aberration of F-teta lenses at wavelengths distant from the design wavelength - the wavelength of the laser.

Device for optical monitoring is known [5], comprising a scanner , a photodiode with lens and videocamera with lens.

This device does not provide the measuring the temperature of small spots of laser irradiation because only character of photodiode signal is registered. Also it is not possible, using a scanner with a F-teta lens and videocamera for melt pool size measurement , to receive correct results due strong chromatic aberration of F-teta lenses at wavelengths distant from the design wavelength - the wavelength of the laser.

Device for optical monitoring presented in [3,4] which is closest in technical essence to claimed device. Device comprising galvanometer with F-teta lens and 2- channel optical pyrometer with lens ,videocamera with lens.

The disadvantage of this device is that the dichroic mirrors swivel may allocate the spectrum of the radiation sent to the pyrometer , only the weak reflection mirrors and distant from the laser wavelength which leads to measurement errors due to shear the image formed by F-teta lens and pyrometer lens at the entrance aperture of the pyrometer. Also images obtained with a video camera distorted due to the strong aberrations of the F-teta lens because the wavelength of the recording of the image is located away from the design wavelength of the lens - the laser wavelength.

### SUMMARY OF THE INVENTION

The aim of the claimed invention is to develop a method for optically monitoring a surface in an area thereof subject to laser radiation by scanning the surface using a galvanometer scanner with an F-theta lens, and a device for implementing said method, thereby making it possible to obtain full information about the condition of the surface under the effect of laser radiation.

The spectral lines of the thermal radiation of the surface recorded with a pyrometer, the spectral bands of the thermal radiation of the surface recorded with a video camera and the spectral lines of the radiation of sources of illumination are situated in the spectral passband of a galvanometer scanner on either side and in the immediate vicinity of the spectral line of the laser radiation.

The device for optical monitoring additionally comprises a rotary mirror with an elliptical region in the centre having a coating with 100% reflection on the wavelength of the laser, while the peripheral region of the mirror has high transmission in the region of the spectrum outside the emission band of the laser.

The device for optical monitoring additionally comprises a rotary mirror having a central elliptical aperture with 100% transmission of laser radiation and a broadband reflective coating on the periphery of the mirror.

The device for optical monitoring additionally comprises a source of illumination of the surface in the area subject to laser treatment, which source is optically connected to the galvanometer scanner and the video camera, wherein the wavelength of the radiation of said source is situated close to the line of radiation of the laser and in the spectral band of reflection of the mirrors of the galvanometer scanner.

### BRIEF DESCRIPTION OF FIGURES

Fig 1. Is a transmission curve of the optical system of a galvanometer scanner with location of wavelengths of the pyrometer , videocamera and illumination source.
Fig.2 is the variant of an optical scheme of the inventive device for optical monitoring.
Fig.3 is the variant of an optical scheme of the inventive device for optical monitoring.
Fig.4 is the variant of an optical scheme of the inventive device for optical monitoring.

### DETAILED DESCRIPTION OF THE INVENTION

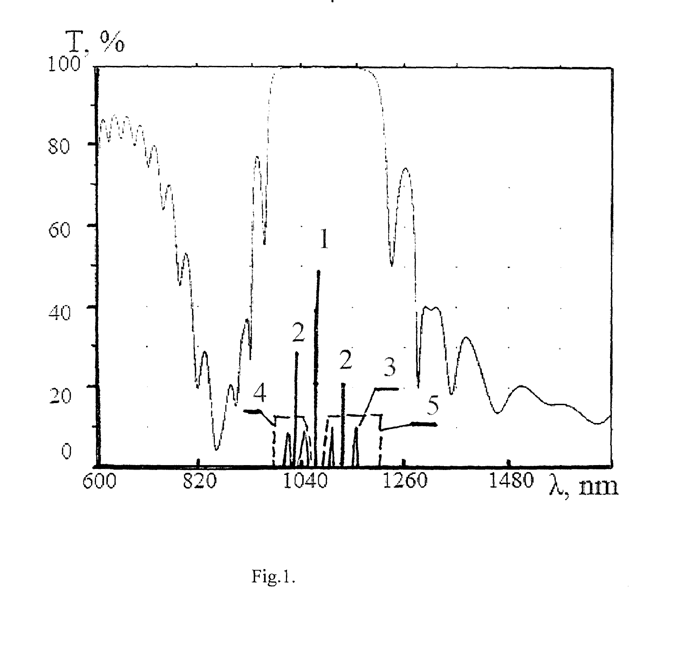

The aim of the claimed invention is to develop a method for optically monitoring a surface in an area thereof subject to laser radiation by scanning the surface using a galvanometer scanner with an F-theta lens allows one to obtain full information on the state of the surface in the area of laser exposure by measuring the maximum surface temperature in the laser irradiation spot, the temperature distribution in the area, the size of molten bath and other structures.
The essence of the method is explained in Figure 1 .

In the present method the spectral lines 3 of thermal radiation from the surface registered by multichannel pyrometer, spectral lines 4, 5 of the thermal image of the surface registered by the videocamera , and the spectral line of a illumination source 2 lay in the passband of the galvanometer scanner in the immediate vicinity of the laser wavelength 1 . This provides minimal distortion and high accuracy measurement results because of the small aberrations F-teta lens in this wavelength region .

An apparatus is provided for measuring the surface temperature , its distribution in the laser irradiation area and for obtaining images of the surface

Device consists of galvanometer scanner with F-teta lens, multichannel optical pyrometer with lens , camera with lens and source of surface illumination.
Using a rotary mirrors with variable reflectance over the surface the laser radiation is introduced into the scanner through the mirrors central area with 100% or 0% reflection. Thermal radiation of the surface and radiation of the illumination source scattered by the surface are directed to pyrometer and videocamera through the peripheral areas of the mirrors outside the laser line but in its immediate vicinity.

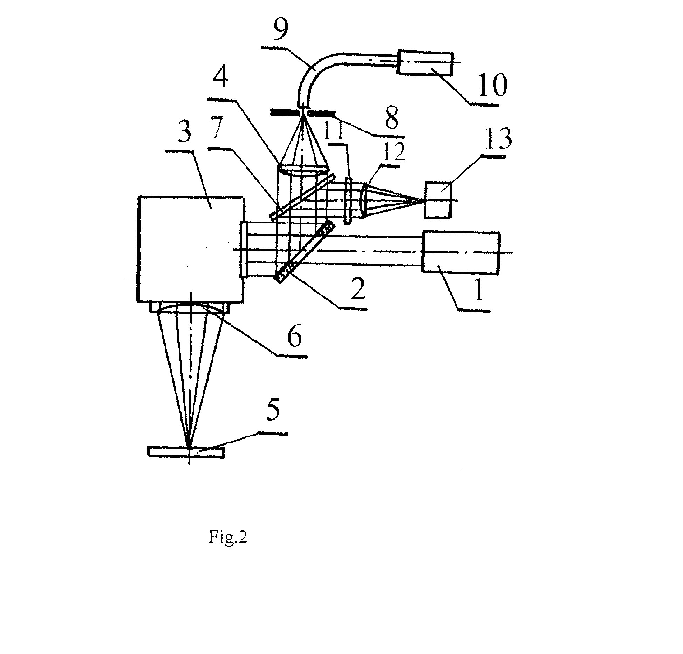

The essence of the claimed device is explained in the drawing (FIG. 2), where 1 is a laser, 2 - rotary mirror, 3 - galvanometer scanner, 4 - lens, 5 - the surface being treated , 6 - F-teta lens, dichroic mirror -7, 8 - the diaphragm of pyrometer, 9 - fiber, 10 - pyrometer, 11 - filters, 12 - lens, 13 - videocamera .

The device operates as follows. Radiation of laser 1 passes through the central area of the rotary mirror and is introduced onto galvanometer scanner mirror 3 and using F-teta lens 6 focuses on the surface 5 . When scanner mirrors rotate laser focus is moved over the surface 5 . Image of the focal region is projected on the diaphragm of the pyrometer 8 with F-teta lens and lens of the pyrometer 4. Pyrometer 10 detects the thermal radiation of the heated surface in narrow spectral regions from small surface area defined by the size of hole of diaphragm.

Using the lens 12 and F-teta lens image of the surface at a wavelength of filter 11 is recorded by camera 13 . The laser light is passed through central elliptical region with 100% transmittance. Since the measurements are made at wavelengths near the line of the laser, the small chromatic aberration of the F-teta lens will lead to negligible shift the image on the diaphragm of the pyrometer and minimal distortion of the image recorded by videocamera occurs.

That makes it possible to measure maximum temperature in laser spot and construct the distribution of the brightness temperature of the surface in the area of treatment. Multichannel pyrometer with 3 number of channels allows determine the emissivity of the surface, which allows to get distribution of the thermodynamic temperature.

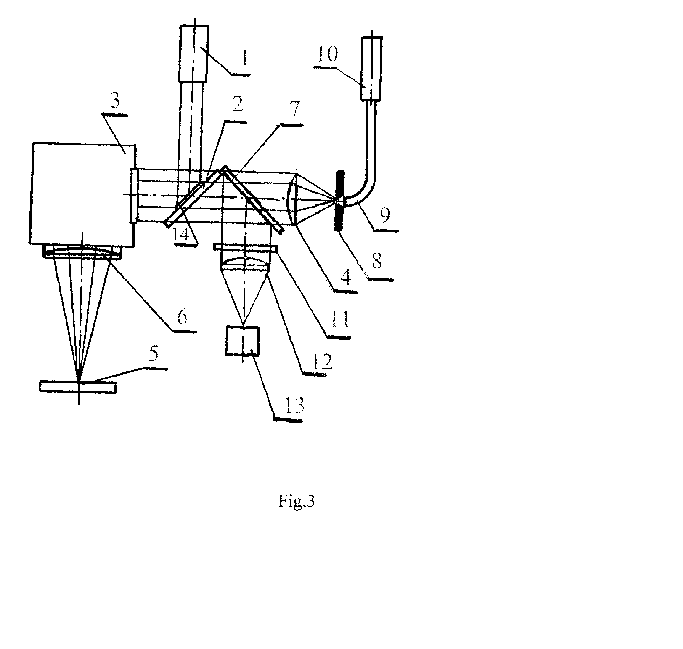

The device at Figure 3 has 100 % reflective mirror at laser wavelength at the central region and 100 % passing periphery of the mirror in a wide range.

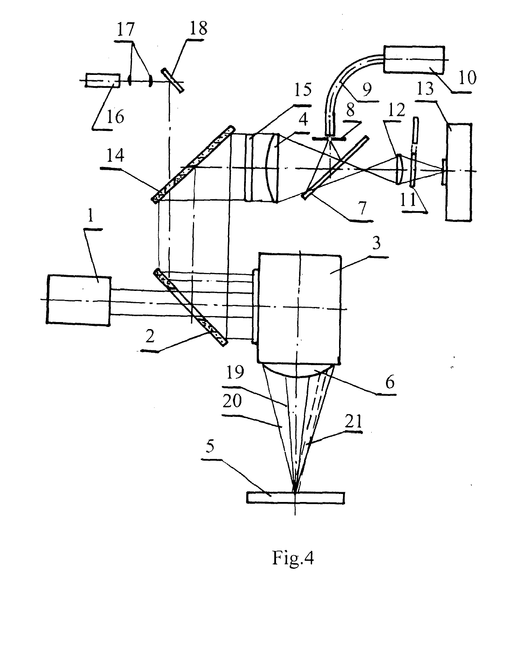

The device at Fig.4 additionally includes a illumination source 16 for backlight of the surface whose radiation using a telescope 17 and rotating mirror 18 and mirror 2 is introduced into galvanometer scanner and focuses in the treatment area. The surface image at source wavelength is constructed using the F-teta lens and lens 4 in the plane 12 of the matrix of videocamera 13 through the filters 11 which allocates either source radiation or thermal radiation of the surface.

Thus, the claimed method and apparatus provide complete monitoring of the surface in the area of laser irradiation during its scan using galvanometer scanner with F-teta lens with precision and accuracy using standard optics.

### References

1. Patent JP N°2007190576 A.
2. J.Benda , A.Parasco. US PATENT 5,427,733. 27.06.1995
3. Kruth J.-P. , Mercelis, EP 2032345. 03.11.2009.
4. Chivel Yu., Smurov I., B. Laget / / Patent RU 2371 704,27.10.2009.
5. Chivel Yu., Smurov I., B. Laget / / Patent EP 2147738 . 27.01.2010.

## Claims

1. The method of optical surface monitoring in the area of influence of laser radiation at the surface using galvanometer scanning with a lens consisting of registration temperature and its distribution in the area of influence by recording surface thermal radiation in several spectral intervals and recording images of the surface in the light of outer source of radiation wherein the spectral lines of registration of thermal radiation by pyrometer and spectral bands of registering surface thermal radiation by camera and spectral line of illumination source are located in the spectral passband of galvanometer scanner on both sides of the spectral line of laser radiation in its immediate vicinity.

2. A device for optical monitoring of the surface area exposure to laser radiation , comprising a galvanometer F-teta lens, optical pyrometer with a lens and videocamera with a lens, wherein it additionally comprises a rotary mirror having a central elliptical region with a coating having 100% reflection at the laser wavelength , a peripheral region mirror has a high transmission in the region of the spectrum outside the band of the laser radiation .

3. The device according to claim 2, **characterized in that** the rotary mirror has a central elliptical hole with 100% transmission of the laser radiation and broadband reflective coating on the periphery of the mirror.

4. The device according to claim 2, **characterized in that** further comprising a source of surface illumination in the area of laser processing, optically coupled to a video camera, galvanoscanner and the wavelength of the radiation source is located near the laser line and in the spectral band of reflection of the galvoscanner mirrors.
